# EUROPÄISCHE PATENTSCHRIFT

(11) **EP 0 701 096 B1**
(45) Veröffentlichungstag und Bekanntmachung des Hinweises auf die Patenterteilung: **26.09.2001**
(21) Anmeldenummer: 95112257.1
(22) Anmeldetag: 04.08.1995
(51) Int. Cl.: F25B 49/02, F25B 9/00, B60H 1/32

(54) **Verfahren zum Betreiben einer Kälteerzeugungsanlage für das Klimatisieren von Fahrzeugen und eine Kälteerzeugungsanlage zur Durchführung desselben**
Method for operating a cold producing installation for air conditioning of vehicles and cold producing installation carrying out the same
Procédé de fonctionnement d'une installation productrice de froid pour la climatisation de véhicules et installation productrice de froid pour sa mise en oeuvre

(30) Priorität: 09.09.1994 DE 4432272
(43) Veröffentlichungstag der Anmeldung: 13.03.1996
(73) Patentinhaber: DaimlerChrysler AG, 70567 Stuttgart (DE)
(72) Erfinder: Abersfelder, Günther, Dr., D-71065 Sindelfingen (DE); Maué, Jürgen, Dipl. Ing., D-70771 Leinfelden-Echterdingen (DE); Wertenbach, Jürgen, Dipl. Ing., D-70734 Fellbach (DE)

(56) Entgegenhaltungen:
- WO-A-93/06423
- DE-A- 1 403 983
- DE-A- 3 633 645
- DE-A- 3 731 944
- DE-A- 3 822 465
- DE-A- 3 829 096
- DE-A- 3 900 548
- DE-A- 4 320 145
- US-A- 2 123 123
- US-A- 2 191 102
- US-A- 2 423 677
- US-A- 3 264 842

## Beschreibung

Die Erfindung betrifft ein Verfahren zum Betreiben einer Kälteerzeugungsanlage zum Klimatisieren von Fahrzeugen und eine Kälteerzeugungsanlage zur Durchführung desselben gemäß dem Oberbegriff des Patentanspruches 1 hinsichtlich des Verfahrens und gemäß dem Oberbegriff des Patentanspruches 12 hinsichtlich der Kälteerzeugungsanlage.

Ein gattungsgemäßes Verfahren bzw. eine gattungsgemäße Vorrichtung ist aus der WO-A-93/06423 oder der EP 0 424 474 bekannt. Im letztgenannten Dokument ist eine Methode zur Prozeßregelung in einem Dampfkompressionskreis beschrieben. Dieser beinhaltet einen Kompressor, einen Kühler, ein Drosselventil und einen Verdampfer, die sukzessiv in Serie verbunden sind und einen integralen, geschlossenen Kreislauf bilden, der unter überkritischem Druck auf der Hochdruckseite des Kreises arbeitet. Bei der beschriebenen Methode wird mit einer Änderung des Druckes über eine Füllstandshöhenänderung eines im Kreislauf auf Niederdruckseite zusätzlich integrierten Pufferbehälters bei nahezu konstantem Massenstrom auf der Hochdruckseite eines überkritischen Kälteprozesses die spezifische Enthalpie des Kältemittels beeinflußt. Durch Variierung der Enthalpiedifferenz des Kältemittels stromauf der Drosselstelle und hinter der Drosselstelle stromauf der Einlaßöffnung des Verdampfers kann dabei die Kälteleistung gesteuert werden. Das Kältemittel wird nach der Verdichtung soweit wie möglich im Gaskühler von einem diesen umströmenden Kühlmedium heruntergekühlt, wie dies technisch sinnvoll ist. Durch Regelung des Drosselventils stellt sich auf der Hochdruckseite ein Druck ein, um die jeweils gewünschte Enthalpiedifferenz zu erreichen. Die am Verdampfer anfallende Kälteleistung steigt mit zunehmenden, bzw. sinkt mit abnehmendem Druck auf der Hochdruckseite.

Eine die Effizienz von überkritischen Kreislaufprozessen bezeichnende Größe ist der "Coefficient of Performance", COP, welcher definiert ist als das Verhältnis zwischen Kälteleistung und aufgewendeter Kompressor-Antriebsleistung. Für die erwarteten Betriebsbedingungen, die z.B. durch die Verdampfungstemperatur und die Kältemitteltemperatur am Gaskühleraustritt (Kondensator) definiert sind, durch Berechnung und Messung Daten erstellt werden, die die Kälteleistung (Qo), die aufzuwendende Antriebsleistung und ihr Verhältnis (COP) als eine Funktion des Druckes auf der Hochdruckseite ausweisen. Bei einem bestimmten Druck auf der Hochdruckseite zeigt der COP in der Folge abhängig von den Betriebsbedingungen ein Maximum. Durch die Anwendung dieser Daten ergibt sich eine Eingrenzung des einzustellenden, technisch sinnvollen Hochduckes auf der Hochdruckseite des überkritischen Kältekreislaufes im Bereich des maximalen COP's.

Davon ausgehend vergrößert sich der COP bei der bekannten Druckregelung jedoch mit ansteigendem Druck auf der Hochdruckseite, d.h. bei steigendem Kälteleistungsbedarf, nur bis zu einem bestimmten Betrag. Dannach beginnt er abzunehmen, da die hinzugewonnene Kälteleistung nicht mehr länger die zusätzliche Arbeit bei der Kompression ausgleichen kann. Bei sehr geringem Kälteleistungsbedarf wird das Drosselmittel aufgesteuert, wodurch die Enthalpiedifferenz klein wird. Dadurch wird jedoch auch der COP sehr klein, d.h. es wird eine hohe Verdichtungsleistung erbracht und davon nur wenig an Kälteleistung umgesetzt, so daß der bekannte Kreislaufprozeß äußerst uneffizient wird. Die beschriebene Art der Leistungsregelung weist somit hinsichtlich der Effizienzbetrachtung nur eine begrenzte Regelbreite auf, die sich zwischen einem unteren und ein oberen Wert an Kälteleistung, zwischen etwa 2 und 10 kW, bewegt und einem Verbraucher zur Verfügung gestellt werden kann. Damit wird jedoch auch dann Kälteleistung angeboten, wenn nur wenig oder gar kein Kältebedarf besteht. Eine nach dem bekannten Verfahren arbeitende Klimaanlage kann somit hinsichtlich des Kälteangebotes nicht individuell an die Wünsche des Fahrgastes angepaßt werden, so daß die Anlage nur einen unzureichenden Komfort erzielt und somit fahrzeuguntauglich ist.

Der Erfindung liegt die Aufgabe zugrunde, ein gattungsgemäßes Verfahren bzw. eine gattungsgemäße Kälteerzeugungsanlage dahingehend weiterzuentwickeln bzw. weiterzubilden, daß die Effizienz und der Komfort der Anlage so weit gesteigert wird, daß eine Fahrzeugtauglichkeit einer mit dieser arbeitenden Klimaanlage ermöglicht wird.

Die Aufgabe ist erfindungsgemäß durch die bezüglich des Verfahrens im Patentanspruch 1 und bezüglich der Kälteerzeugungsanlage im Patentanspruch 12 angegebenen kennzeichnenden Merkmale gelöst.

Dank der Erfindung wird ein Kreislaufprozeß ermöglicht, bei dem Kälteleistung unter allen Betriebsbedingungen des Fahrzeuges und allen Umgebungsbedingungen in ausreichendem Maße zur Verfügung gestellt werden kann. Dabei wird Kältemittel über den Verdichter über die Regelung bedarfsweise mehr oder weniger gefördert, wodurch mehr oder weniger an Kältemittelmasse und damit an Kälteleistung am Verdampfer wunschgerecht angeboten werden kann. Der Kältemitteltransport ist weitgehend unabhängig vom Prozeßdruck im Kreislauf, so daß immer, selbst bei sehr hohem oder geringstem Kälteleistungsbedarf, im Bereich des maximalen COP die Kälteerzeugungsanlage betrieben werden kann. Damit ist ein Regelbereich der Kälteleistung von 0 bis zu einem maximalen in technisch sinnvollem Umfang erreichbaren Wert bei hohem COP, also hoher Effizienz des Kreislaufes bezüglich seines Wirkungsgrades erzielbar, wodurch ein sehr hoher Klimatisierungskomfort erreicht wird. Der Verdichter läuft dabei bei keinem Bedarf an Kälteleistung im Leerlauf, wobei bei Entstehen eines Bedarfes durch eine geeignete Regelung seines Durchsatzes durch langsame kontinuierliche Lasterhöhung bezüglich der Förderung des Kältemittels eine sanfte Steigerung des Kälteleistungsangebotes bis zum gewünschten Wert ermöglicht wird. Aufgrund des hohen Komforts - es wird nicht mehr an Kälteleistung angeboten als verlangt wird - bei gleichzeitig hohem Wirkungsgrad bzw. hoher Effizienz des Kreislaufes ist daher die Verwendung einer mit einer derart gestalteten Kälteerzeugungsanlage ausgestatteten Klimaanlage in einem Fahrzeug sinnvoll und somit die Fahrzeugtauglichkeit gegeben.

Zweckmäßige Ausgestaltungen der Erfindung können den Unteransprüchen entnommen werden; im übrigen ist die Erfindung anhand verschiedener in den Zeichnungen dargestellter Ausführungsbeispiele nachfolgend näher erläutert; dabei zeigt:
Fig. 1 schematisch in einer Prinzipskizze einen nach dem erfindungsgemäßen Verfahren arbeitenden Dampfkompressionskreislauf mit einem regelbaren Verdichter und einem regelbaren Drosselmittel,
Fig. 2 ein zum Kreislauf aus Fig. 1 zugehöriges Enthalpie-Druck-Diagramm eines transkritischen Prozesses,
Fig. 3 schematisch in einer Prinzipskizze den nach dem erfindungsgemäßen Verfahren arbeitenden Dampfkompressionskreislauf aus Fig. 1 mit einem Pufferbehälter und einem Gegenstromwärmetauscher und einem Konstantdrosselventil,
Fig. 4 ein zum Kreislauf aus Fig. 3 zugehöriges Enthalpie-Druck-Diagramm eines transkritischen Prozesses,
Fig. 5 schematisch in einer Prinzipskizze den Verdichter aus Fig. 1 und Fig. 3 als Taumelscheibenverdichter mit Verdichtungshubverstellung,
Fig. 6 schematisch in einer Prinzipskizze den Verdichter aus Fig. 1 und Fig. 3 als Taumelscheibenverdichter mit Kompressionsendvolumenverstellung.

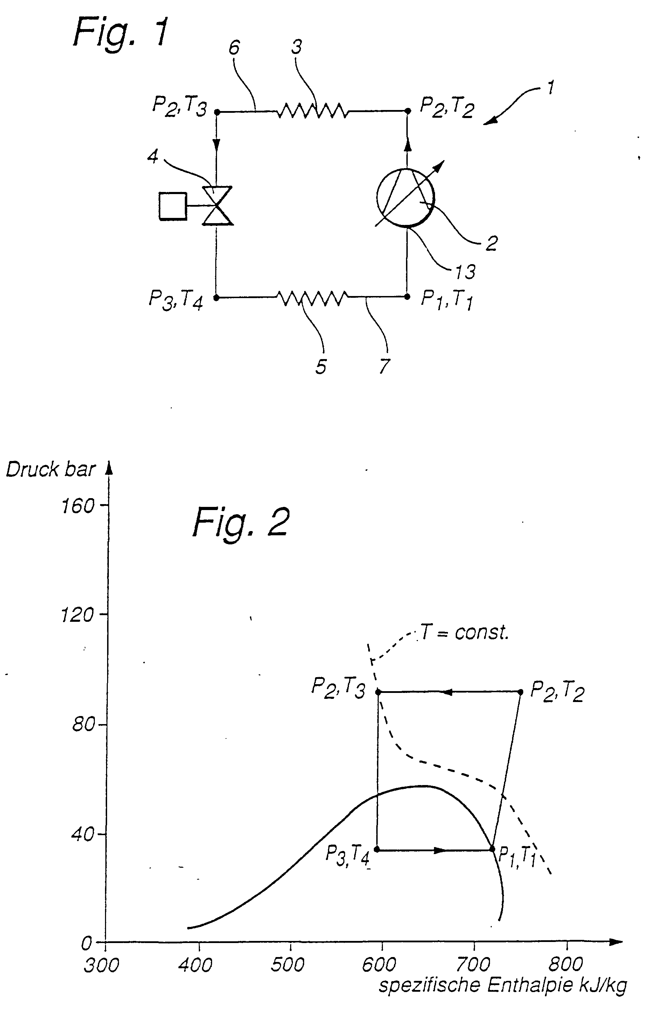

In Fig. 1 wird ist mit 1 ein Dampfkompressionskreislauf dargestellt, der in Reihe geschaltet sukzessiv hintereinander einen Verdichter 2, einen Gaskühler 3 ein Drosselmittel 4 und einen Verdampfer 5 beinhaltet. Der Verdichter 2 ist hierbei bezüglich seines Durchsatzes regelbar. Ebenfalls regelbar ist das Drosselmittel 4, das als Expansionsventil ausgebildet sein kann.

Arbeitet der Verdichter 2 unter Last, so verdichtet er gemäß Fig. 2 eine Kältemittelmenge von einem Ausgangsdruck p₁ auf einen höheren Druck p₂, wobei die Prozeßtemperatur von T₁ auf T₂ ansteigt. Das verdichtete gasförmige Kältemittel wird nun in dem Gaskühler 3 über ein diesen umströmendes Kühlmittel, wie beispielsweise Kaltluft oder Wasser, isobar auf eine Temperatur T₃ abgekühlt. Das Kühlmittel wird beim Durchströmen des Expansionsventils 4 isenthalp auf einen Druck p₃, der dem Ausgangsdruck p₁ entspricht, entspannt, wobei sich das Kühlmittel auf eine Temperatur T₄ weiter abkühlt, die im Verflüssigungsbereich des Kältemittels liegt. Erreicht das so entstandene Zweiphasen-Gemisch Gas/Flüssigkeit des Kältemittels den Verdampfer 5 verdampft der Flüssigkeitsanteil, bzw. der sehr kühle Gasanteil erwärmt sich dort unter Abgabe von Kälte bzw. unter Aufnahme von Wärme von außen. Dabei wird die Ausgangstemperatur T₁ wieder erreicht.

Die am Verdampfer 5 angebotene Kälteleistung errechnet sich aus dem Produkt vom Massenstrom des Kühlmittels und der Enthalpiedifferenz zwischen der Hochdruck- und der Niederdruckseite 6,7 des Kreislaufes 1. Um dem anliegenden Kälteleistungsbedarf gerecht zu werden, ist hier der Verdichter 2 regelbar ausgelegt. Dadurch kann der Durchsatz an Kühlmittel durch den Verdichter 2 und somit der Massenstrom im Kreislauf 1 diesem Bedarf angepaßt werden.

Will man dabei nun bei einer Verwendung der Kälteerzeugungsanlage in einem Kraftfahrzeug in allen Betriebzuständen des Fahrzeuges und Umgebungsbedingungen gleichzeitig höchste Effizienz der Kälteerzeugungsanlage, d.h. will man immer im Maximum des COP liegen, so muß das Expansionsventil 4 eine Regelung erhalten, die mit der Regelung des Verdichters 2 korreliert sein muß. Dabei wird in der einfachsten Ausführung des Ventils 4 dessen Öffnungsquerschnitt um so weiter geöffnet, je höher die vom Verdichter 2 geförderte Kältemittelmenge ist. Dabei wird in der Fördermenge dann ein Maximum erreicht, wenn der Druckunterschied zwischen Hoch- und Niederdruckseite 6,7 zu gering wird, um eine für den Kreisprozeß zur Abkühlung erforderliche Entspannung durch das Expansionsventil 4 zu erhalten. Dies ist zumindest dann gegeben, wenn die Drosselwirkung nicht mehr existiert, wenn also der Öffnungsquerschnitt dem Querschnitt der kältemittelführenden Leitung vor bzw. nach der Drosselstelle entspricht. Ist der Druckunterschied jedoch groß genug, so verläuft die Kühlmittelförderung auch bei einer Änderung, die stets bei einer Leistungsanpassung an einen neuen aktuellen Bedarf erfolgt, unter einem konstanten Druckverhältnis im Kreislauf 1.

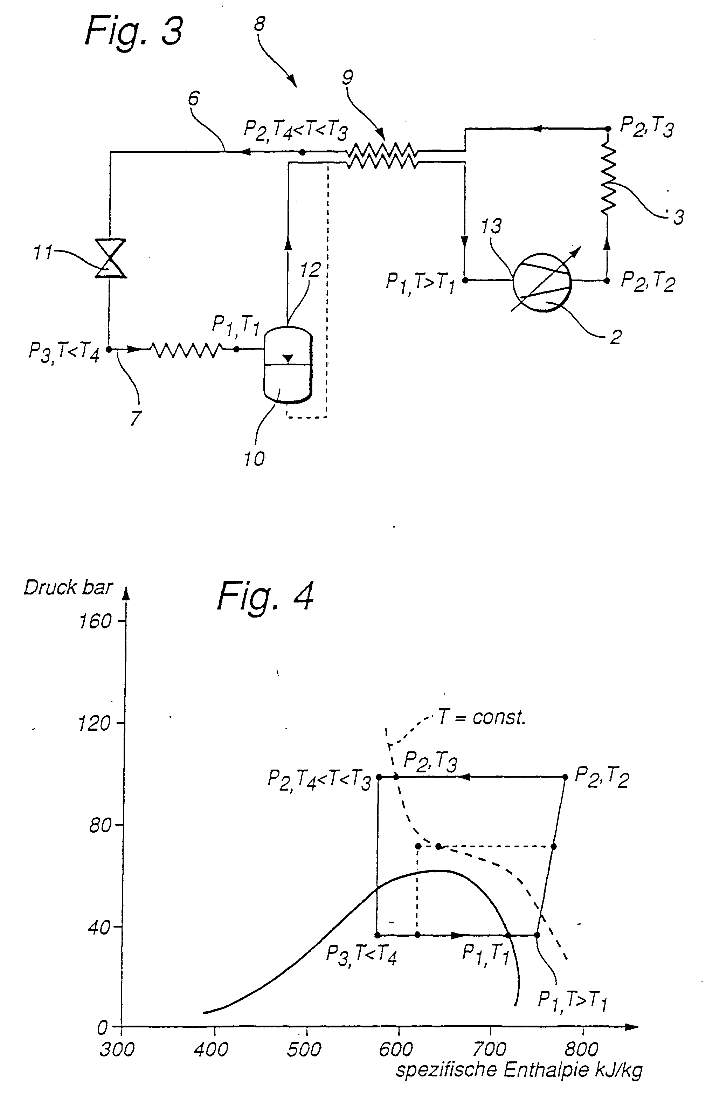

Fig. 3 zeigt einen zum Kreislauf 1 des vorigen Ausführungsbeispiels alternativen Kreislauf 8. Der Kreislauf 8 beinhaltet im Unterschied zum Kreislauf 1 zusätzlich einen Gegenstromwärmetauscher 9 und einen Pufferbehälter 10. Das Drosselmittel ist als Konstantdrosselventil 11 ausgebildet. Alle zusätzlichen Kreislaufkomponenten sind mit den bisherigen in dem integralen Kreis ebenfalls in Reihe geschaltet. Der Hochdruckteil des Gegenstromwärmetauschers 9 ist zwischen dem Gaskühler 3 und dem Konstantdrosselventil 11 auf Hochdruckseite 6 des Kreislaufes 8 angeordnet, während der Niederdruckteil auf Niederdruckseite 7 zwischen Verdampfer 5 und Verdichter 2 sich befindet. Der Pufferbehälter 10 ist einerseits mit dem Austritt des Verdampfers 5 und andererseits über seinen Austritt 12 für gasförmiges Kältemittel mit dem Niederdruckteil des Gegenstromwärmetauschers 9 verbunden.

Zum Kreislauf nach Fig. 2 identisch verdichtet der regelbare Verdichter 2 eine bestimmte Kältemittelmenge unter Abkühlung im Gaskühler 3. Das abgekühlte Kältemittel wird nun durch den Hochdruckteil des Gegenstromwärmetauschers 9 geleitet, in welchem es noch weiter isobar abgekühlt wird. Durch die Entspannung über das Konstantdrosselventil 11 gelangt das Kühlmittel isenthalp zu vergleichsweise noch tieferen Temperaturen als im Beispiel des Kreislaufes 1. Am Verdampfer 5 verdampft ein Flüssigkeitsanteil des Zweiphasen-Gemisches unter Wärmeaufnahme. Der restliche noch flüssige Anteil des Kältemittels sammelt sich dann im Pufferbehälter 10. Der im wesentlichen gasförmige Anteil strömt in den Niederdruckteil des Gegenstromwärmetauschers 9, wird dort weiter aufgewärmt und gelangt von dort in den Verdichter 2.

Bei höherem Kälteleistungsbedarf fördert der Verdichter 2 entsprechend mehr Kältemittelmenge. Da das Drosselmittel hier nicht regelbar ist, erfolgt gleichzeitig eine Erhöhung des Druckes auf der Hochdruckseite 6 des Kreislaufes 8 und damit eine Vergrößerung der Enthalpiedifferenz. Ebenso erfolgt eine Verlagerung der Kühlmittelmenge im gesamten Kreislaufes in Richtung der Hochdruckseite 6. Durch die erhöhte Enthalpiedifferenz und den gleichzeitig erhöhten Massenstrom durch die Durchsatzerhöhung des Verdichters 2 wird dabei mehr an Kälteleistung als bei vergleichbarer Förderleistung im Kreislauf 1 angeboten. Dadurch wird am Verdichter 2 für den gewünschten Bedarf an Kälteleistung eine geringere Fördermenge und somit eine geringere Förderleistung benötigt. Aufgrund der für unterschiedlichen Kältebedarf erfolgenden Druckänderung auf Hochdruckseite 6 ist dabei jeder Kälteleistung ein ganz bestimmter Kreislauf 8 zugeordnet, wie Fig. 4 verdeutlicht. Für größere Kälteleistungen verschiebt sich die Druckhöhe zu höheren Drücken, d.h. die vom thermodynamischen Kreislauf begrenzte Fläche wird größer, für kleinere Kälteleistungen verschiebt sie sich zu niederen Drücken, d.h. die vom thermodynamischen Kreislauf begrenzte Fläche wird kleiner.

Durch die gleichzeitige Änderung des Kältemitelmassenstromes wird die bei sehr hohem und sehr niedrigen Kälteleistungsbedarf sinkende Effizienz des Kreislaufes, die bei einer Regelung der Kälteleistung durch Druckvariation auf der Hochdruckseite 6 auftritt, wird ein Teil von dieser Effizienzabnahme kompensiert, jedoch ist es in genannten Bereichen an Kälteleistungsbedarf nicht möglich, den Kälteerzeugungsprozeß bei maximalem COP abfolgen zu lassen. Ein Vorteil des Kreislaufes 8 ist der Entfall einer aufwendigen Ventilsteuerung für das Expansionsventil, mit der ein Arbeiten bei maximalem COP in jedem Bereich und unter allen Fahrbedingungen und Umgebungsbedingungen möglich wäre.

Durch den Pufferbehälter 10 wird im übrigen aufgrund seiner Speicherfähigkeit von Kältemittel bei einer sehr hohen Kältemittelansammlung auf der Hochdruckseite 6 des Kreislaufes 8 bei hohem Kälteleistungsbedarf ein starkes Absinken des Ansaugdruckes im Verdampfer 5 verhindert. Gleichzeitig sammelt er überschüssige Kältemittelmengen aus dem Kreislauf 8 bei niederem Kälteleistungsbedarf, also bei niedereren Drücken auf der Hochdruckseite 6 des Kreislaufes 8. Außerdem kompensiert er die Leckagemenge an Kältemittel im Kreislauf 8. Desweiteren ist im Pufferbehälter ein Adsorbens zur Aufnahme von im Kreislauf befindlichem Wasser enthalten, um somit die Bildung von korrosiver Kohlensäure zu vermeiden.

Der Gegenstromwärmetauscher 9 verbessert durch die zusätzliche Abkühlung des Kältemittels nach Durchlauf durch den Gaskühler 3 die verfügbare Kälteleistung am Verdampfer 5 und somit die Effizienz des Kälteprozesses und damit der Kälteerzeugungsanlage. Er dient desweiteren der Rückführung von Schmieröl, das aus dem Verdichter 2 in den Kreislauf 8 übertritt, zum Verdichter 2.

Die Durchsatzregelung des Verdichters 2 kann auf verschiedene Arten erfolgen. Zum einen über die Änderung seiner Antriebsdrehzahl, zum anderen über die Änderung seines Verdichtungshubes sowie über die Änderung seines Kompressionsendvolumens. Desweiteren ist eine Regelung der Ansaugmenge an Kältemittel auf der Ansaugseite 13 über eine regelbare Saugdrossel, die der Verdichter 2 dort beinhaltet, denkbar. Dabei wird jeweils mit zunehmendem Verdichtungshub, mit abnehmendem Kompressionsendvolumen, mit zunehmender Ansaugmenge an Kältemittel und mit zunehmender Drehzahl des Verdichterantriebes eine Steigerung des Kältemitteldurchsatzes und somit eine Vergrößerung des Massenstromes im Kreislauf 1 bzw. 8 erreicht. Eine Verringerung des Kältemitteldurchsatzes erfolgt in entsprechend umgekehrter Weise.

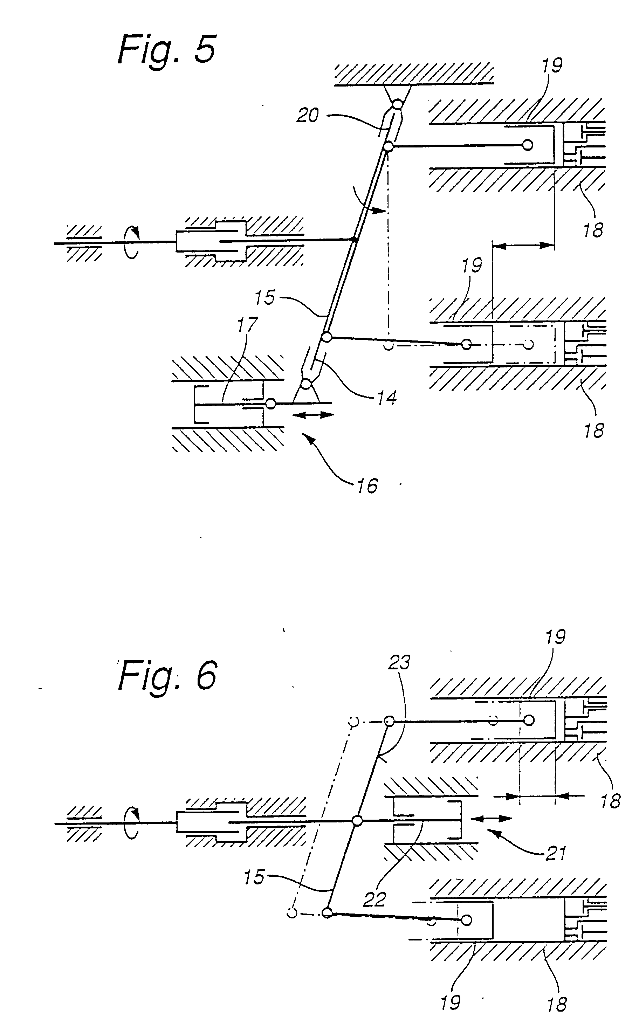

Der Verdichter 2 kann als Taumelscheibenverdichter gemäß Fig. 5 ausgebildet sein. Zur Veränderung des Verdichtungshubes weist der Verdichter 2 an seinem jeweils unteren Umfangsbereich 14 der Taumelscheibe 15 eine Verstelleinrichtung 16 auf, die auf dem Prinzip eines verschiebbaren Stellkolbens 17 basieren kann. Die Verstelleinrichtung 16 bewirkt durch eine bezüglich der Bewegungsrichtung der von der Taumelscheibe 15 beaufschlagten und in Verdichterzylindern 18 geführten Verdichtungskolben 19 parallele Verschiebung des Stellkolbens 17 eine Radialbewegung der Taumelscheibe 15, die an ihrem oberen Umfangsbereich 20 beweglich gelagert ist. Die strichlierte Ausführung des einen Verdichtungskolbens 19 zeigt die Stellung des Verdichters 2 bei minimalem Verdichtungshub.

In Fig. 6 ist das Prinzip zur Änderung des Kompressionsendvolumens des Verdichters 2 dargestellt. Hierbei wird eine Verstelleinrichtung 21 verwendet, die ebenfalls auf einer parallel zu der Lage der Verdichtungszylinder 18 erfolgenden Verschiebung eines Stellkolben 22 basiert. Der Stellkolben 22 greift hier jedoch mittig an der Taumelscheibe 15 auf der den Verdichtungszylindern 18 zugewandten Seite 23 an. Die Taumelscheibe 15 erfährt dadurch bei Verschiebung des Stellkolbens 22 eine axiale Verschiebung, wodurch eine Verschiebung des oberen Totpunktes der Verdichtungskolben 19 und somit eine Veränderung des Kompressionsendvolumens erreicht wird. Die strichlierte Ausführung des Verdichtungskolbens 18 zeigt hier eine Stellung bei sehr hohem Kompressionsendvolumen.

Es ist im übrigen denkbar, für ein verbessertes Ansprechverhalten des Verdichters auf eine Regelung alle - oder zumindest davon zwei -verschiedenen angeführten Verstelleinrichtungen gleichzeitig am Verdichter 2 vorzusehen und sie miteinander zu koppeln. Desweiteren können auch mehrere Verdichter 2 hintereinander in Reihe oder parallel zueinander geschaltet im Kreislauf anstelle eines Verdichters angeordnet sein.

Die Verstellvorrichtungen für die Änderungen von Drehzahl, Ansaugmenge, Kompressionsendvolumen und Verdichtungshub des Verdichters 2 können manuell über ein Rändelrad innerhalb der Fahrgastzelle je nach Bedarf an Kälteleistung betätigbar sein, wonach der Kreislauf in Abhängigkeit von der festgelegten Stellung die jeweils individuell geforderte Kälteleistung aufbringt. Dieser Kälteleistungswert ist soweit festgelegt, wie an der Verstellung manuell nichts verändert wird.

Alternativ dazu ist es denkbar, eine bestimmte Temperatur für den Innenraum der Fahrgastzelle einzustellen, wobei in Abhängigkeit von den Umgebungsbedingungen und dem Fahrbetrieb die Verstelleinrichtungen und somit der Kreislauf über einen Regler jeweils nach einem elektronisch abgespeicherten Kennfeld selbsttätig gesteuert werden. Dabei ändert sich die angebotene Kühlleistung mit Änderung der Umgebungsbedingungen, bis die eingestellte Temperatur erreicht ist.

Der Antrieb des Verdichters 2 kann unabhängig vom Antriebsmotor des Fahrzeuges mit einem von diesem gesonderten Motor, insbesondere einem Elektromotor gekoppelt sein. Der Elektromotor bezieht seine elektrische Energie von einer Batterie oder einem Generator, der mit dem Fahrzeugmotor verbunden ist. Dadurch wird eine flexible Anordnung der Kälteerzeugungsanlage im Fahrzeug ermöglicht.

In einer davon abweichenden Ausführung kann der Antrieb des Verdichters 2 auch mit dem Antriebsmotor des Fahrzeuges direkt gekoppelt sein. Dabei ist zwar die Anordnung der Kälteerzeugungsanlage im wesentlichen festgelegt, jedoch kann diese aufgrund des Fehlens eines separaten Antriebsmotors und eines Stromerzeugers sehr kompakt und damit in bauraumsparender Weise ausgebildet werden. Dies ist für eine Verwendung insbesondere bei sehr kleinen Kraftfahrzeugen, bei denen der Bauraum minimal ist, besonders günstig. Weiterhin entfallen gleichzeitig mit den Stromerzeugungs- und separaten Antriebskomponenten sämtliche mit diesen verbundenen mechanischen und elektrischen Leistungsverluste. Bei dem direkten Antrieb des Verdichters 2 über den Fahrzeugmotor muß allerdings zur Realisierung der Anpassung der Kälteleistung an den jeweiligen Bedarf gegeben sein, daß bei einer Verwendung einer Verstellvorrichtung, mit der die Drehzahl des Verdichterantriebs regelbar ist, mit ihrem Verstellantrieb nicht mit dem Antriebsmotor des Fahrzeuges gekoppelt ist. Da der Kältemitteldurchsatz des Verdichters 2 nun über den Antrieb des Fahrzeugmotors von dessen Drehzahl abhängig ist, ist es sinnvoll, die Verstelltätigkeit der jeweiligen Verstelleinrichtung in jedem Fall vom jeweils aktuellen Betriebsbereich des Fahrzeugmotors abhängig zu beeinflussen, um eine Erzeugung übermäßiger oder viel zu niedriger Kälteleistung durch zu hohen oder zu niedrigen Kältemitteldurchsatz zu verhindern und um dadurch die gewünschte konstante Kälteleistung oder eine konstante Innentemperatur im Fahrzeug zu erhalten.

Als Kältemittel ist für den mit transkritischem Druck arbeitenden Kreislauf CO₂ oder ein anderes umweltverträgliches, nichtbrennbares, ungiftiges und unter transkritischen Druckbedingungen arbeitendes Kältemittel vorgesehen.

Zur Klimatisierung der Fahrzeuginnenraumluft werden heute überwiegend Kaltdampf-Kälteanlagen mit Fluorkohlenwasserstoffen (FKW) oder mit Fluorchlorkohlenwasserstoffen (FCKW) als Kältemittel eingesetzt. Bei diesen Kältemitteln hat es sich in der Zwischenzeit herausgestellt, daß sie maßgeblichen Anteil an dem Abbau der Ozonschicht der Atmosphäre tragen, wobei sie auch für den Treibhauseffekt mitverantwortlich gemacht werden. Ein neues Ziel bei der Entwicklung von Fahrzeugklimaanlagen ist es daher, einen Kaltdampf-Kälteprozeß einzuführen, der die Benutzung der FKW's und FCKW's vermeidet und statt dessen Stoffe, insbesondere aus dem natürlichen Lebensraum als Kältemittel einsetzt. Ein solcher Kälteprozeß mit CO₂ als Kältemittel genügt hinsichtliche Sicherheit, Umweltgefahren, Effizienz und Kosten den Anforderungen im Fahrzeug. CO₂ ist ein Kälteträger mit einer verhältnismäßig tiefen kritischen Temperatur, so daß es vorkommen kann, daß die Abkühlung des verdichteten Gases nicht mehr imstande ist, eine Kondensation einzuleiten, nämlich wenn nur ein Kühlmedium auf einem hohen Temperaturniveau am Gaskühler 3 zur Verfügung steht. Die im Kühler auftretende Zustandsänderung konstanten Druckes erfolgt dann vollständig außerhalb des Sättigungsgebietes.

## Patentansprüche

1. Verfahren zum Betreiben einer Kälteerzeugungsanlage für das Klimatisieren von Fahrzeugen, bei dem auf der Hochdruckseite eines Dampfkompressionskreislaufes (1,8), der einen Verdichter (2), einen Gaskühler (3), ein Drosselungsmittel (4,11) und einen Verdampfer (5) beinhaltet, die in Reihe geschaltet sind und einen integralen geschlossenen Kreis bilden, zum Angebot von Kälteleistung ein hinsichtlich des kritischen Druckes eines im Kreislauf umlaufenden Kältemittels überkritischer Druck erzeugt und gleichzeitig auf der Niederdruckseite des Kreislaufes ein unterkritischer Druck erreicht wird, wobei dem auf Niederdruckseite abgekühlten Kältemittel über den Verdampfer Wärmeenergie zugeführt, bzw. Kälteenergie abgeführt wird,
**dadurch gekennzeichnet,**
**daß** der Kältemittelmassenstrom im Kreislauf (1,8) durch Regulierung des Kältemitteldurchsatzes im Verdichter (2) variiert wird.

2. Verfahren nach Anspruch 1,
**dadurch gekennzeichnet,**
**daß** das Drosselmittel (4) derart geregelt wird, daß der Hochdruck auf der Hochdruckseite (6) des Kreislaufes (1) annähernd konstant gehalten wird.

3. Verfahren nach Anspruch 1,
**dadurch gekennzeichnet,**
**daß** die Regulierung des Kältemitteldurchsatzes im Verdichter (2) durch Ändern der Ansaugmenge an Kältemittel im Verdichter (2) erfolgt.

4. Verfahren nach Anspruch 1,
**dadurch gekennzeichnet, daß** die Regulierung des Kältemitteldurchsatzes im Verdichter (2) durch Ändern des Verdichtungshubes im Verdichter (2) erfolgt.

5. Verfahren nach Anspruch 1,
**dadurch gekennzeichnet,**
**daß** die Regulierung des Kältemitteldurchsatzes im Verdichter (2) durch Ändern des Kompressionsendvolumens im Verdichter (2) erfolgt.

6. Verfahren nach Anspruch 1,
**dadurch gekennzeichnet,**
**daß** die Regulierung des Kältemitteldurchsatzes im Verdichter (2) durch Ändern der Drehzahl des Verdichterantriebs erfolgt.

7. Verfahren nach Anspruch 1,
**dadurch gekennzeichnet,**
**daß** der Kältemitteldurchsatz im Verdichter (2) - nach Wahl einer gewünschten konstanten Temperatur als Soll-Wert für den Innenraum des Fahrzeuges - selbsttätig in Abhängigkeit von einer Soll/Ist-Abweichung der Innentemperatur geregelt wird.

8. Verfahren nach Anspruch 1,
**dadurch gekennzeichnet,**
**daß** die Regulierung des Kältemitteldurchsatzes im Verdichter (2) durch Wahl einer gewünschten konstanten Kälteleistung erfolgt.

9. Verfahren nach Anspruch 1,
**dadurch gekennzeichnet,**
**daß** der Verdichter (2) mit einer von der Fahrgeschwindigkeit und/oder der Drehgeschwindigkeit des Traktionsmotores des Fahrzeuges unabhängigen Geschwindigkeit angetrieben wird.

10. Verfahren nach Anspruch 1,
**dadurch gekennzeichnet,**
**daß** der Verdichter (2) vom Antriebsmotor des Fahrzeuges angetrieben wird.

11. Verfahren nach Anspruch 1,
**dadurch gekennzeichnet,**
**daß** als Kältemittel ein umweltverträgliches, nicht-brennbares, ungiftiges und unter transkritischen Druckbedingungen arbeitendes Kältemittel, vorzugsweise CO₂, verwendet wird.

12. Kälteerzeugungsanlage mit einem Verdichter (2), einem Gaskühler (3), einem Drosselmittel (4,11) und einem Verdampfer (5), welche in Reihe geschaltet sind und einen integralen geschlossenen Dampfkompressionskreislauf (1,8) für ein Kältemittel bilden und derart zusammenwirken, daß der Kreislauf (1,8) in eine Hochdruck- und eine Niederdruckseite (6,7) teilbar ist und auf der Hochdruckseite (6) ein bezüglich des kritischen Druckes des Kältemittels überkritischer Druck einstellbar ist, zur Durchführung des Verfahrens nach Anspruch 1,
**dadurch gekennzeichnet,**
**daß** der Verdichter (2) durchsatzregelbar ist.

13. Kälteerzeugungsanlage nach Anspruch 12,
**dadurch gekennzeichnet,**
**daß** das Drosselmittel ein Konstantdrosselventil (11) ist.

14. Kälteerzeugungsanlage nach Anspruch 12,
**dadurch gekennzeichnet,**
**daß** das Drosselmittel (4) regelbar ist.

15. Kälteerzeugungsanlage nach Anspruch 12,
**dadurch gekennzeichnet,**
**daß** auf Niederdruckseite (7) des Kreislaufes (8) ein Pufferbehälter (10) zur Aufnahme von Kältemittel im Kreislauf (8) integriert ist.

16. Kälteerzeugungsanlage nach Anspruch 12,
**dadurch gekennzeichnet,**
**daß** der Verdichter (2) eine Verstellvorrichtung (16,21) aufweist, mit der eine auf seiner Ansaugseite (13) angeordnete Ansaugdrossel regelbar ist.

17. Kälteerzeugungsanlage nach Anspruch 12,
**dadurch gekennzeichnet,**
**daß** der Verdichter (2) eine Verstellvorrichtung (16) zur Verstellung des Verdichtungshubes des Verdichters (2) aufweist.

18. Kälteerzeugungsanlage nach Anspruch 12,
**dadurch gekennzeichnet,**
**daß** der Verdichter (2) eine Verstellvorrichtung (21) zur Veränderung des Kompressionsendvolumens des Verdichters (2) aufweist.

19. Kälteerzeugungsanlage nach Anspruch 12,
**dadurch gekennzeichnet,**
**daß** der Verdichter (2) eine Verstellvorrichtung zur Veränderung der Drehzahl des Verdichterantriebes aufweist.

20. Kälteerzeugungsanlage nach Anspruch 12,
**dadurch gekennzeichnet,**
**daß** im Kreislauf (8) ein die Hochdruckseite (6) mit der Niederdruckseite (7) thermisch verbindender Gegenstromwärmetauscher (9) integriert ist.

21. Kälteerzeugungsanlage nach einem der Ansprüche 16, 17, 18 oder 19,
**dadurch gekennzeichnet,**
**daß** die Verstellvorrichtungen (16,21) zur Einstellung der Kälteleistung manuell betätigbar sind.

22. Kälteerzeugungsanlage nach einem der Ansprüche 16, 17, 18 oder 19,
**dadurch gekennzeichnet,**
**daß** die Verstellvorrichtungen (16,21) nach Wahl eines Temperaturwertes selbsttätig über einen Regler im Hinblick auf Einhaltung der eingestellten Solltemperatur betätigbar sind.

23. Kälteerzeugungsanlage nach Anspruch 12,
**dadurch gekennzeichnet,**
**daß** zum Antrieb des Verdichters (2) dieser mit dem Antriebsmotor des Fahrzeuges gekoppelt ist.

24. Kälteerzeugungsanlage nach Anspruch 12
**dadurch gekennzeichnet,**
**daß** zum Antrieb des Verdichters (2) dieser mit einem vom Antriebsmotor des Fahrzeuges gesonderten Motor gekoppelt ist.

25. Kälteerzeugungsanlage nach Anspruch 12,
**dadurch gekennzeichnet,**
**daß** als Kältemittel ein umweltverträgliches, nicht-brennbares, ungiftiges und unter transkritischen Druckbedingungen arbeitendes Kältemittel, vorzugsweise CO₂, vorgesehen ist.

## Claims

1. Method for operating a cooling system for the air-conditioning of vehicles, in which, in order to make available refrigerating power, on the high pressure side of a vapour compression circuit (1, 8), which contains a compressor (2), a gas cooler (3), a throttle means (4, 11) and an evaporator (5) which are series-connected and form an integral, closed circuit, a pressure is produced which, with respect to the critical pressure of a refrigerant circulating in the circuit, is supercritical, and, at the same time, on the low pressure side of the circuit a subcritical pressure is achieved, the refrigerant, which is cooled on the low pressure side, being supplied, via the evaporator, with thermal energy, and refrigerating energy being removed, **characterized in that** the refrigerant mass flow in the circuit (1, 8) is varied by regulating the refrigerant flow rate in the compressor (2).

2. Method according to Claim 1, **characterized in that** the throttle means (4) is controlled in a manner such that the high pressure on the high pressure side (6) of the circuit (1) is kept approximately constant.

3. Method according to Claim 1, **characterized in that** the refrigerant flow rate in the compressor (2) is regulated by changing the amount of refrigerant taken into the compressor (2).

4. Method according to Claim 1, **characterized in that** the refrigerant flow rate in the compressor (2) is regulated by changing the compression stroke in the compressor (2).

5. Method according to Claim 1, **characterized in that** the refrigerant flow rate in the compressor (2) is regulated by changing the final compression volume in the compressor (2).

6. Method according to Claim 1, **characterized in that** the refrigerant flow rate in the compressor (2) is regulated by changing the speed of the compressor drive.

7. Method according to Claim 1, **characterized in that** after a desired, constant temperature has been selected as the desired value for the interior of the vehicle, the refrigerant flow rate in the compressor (2) is automatically controlled as a function of a desired/actual deviation of the interior temperature.

8. Method according to Claim 1, **characterized in that** the refrigerant flow rate in the compressor (2) is regulated by selecting a desired, constant refrigerating power.

9. Method according to Claim 1, **characterized in that** the compressor (2) is driven at a speed which is independent of the driving speed and/or of the rotational speed of the engine of the vehicle.

10. Method according to Claim 1, **characterized in that** the compressor (2) is driven by the engine of the vehicle.

11. Method according to Claim 1, **characterized in that** as refrigerant use is made of an environmentally compatible, non-combustible, non-toxic refrigerant which operates under transcritical pressure conditions, preferably CO₂.

12. Cooling system having a compressor (2), a gas cooler (3), a throttle means (4, 11) and an evaporator (5) which are series-connected, form an integral, closed vapour compression circuit (1, 8) for a refrigerant and interact in such a manner that the circuit (1, 8) can be divided into a high pressure side (6) and a low pressure side (7), and on the high pressure side (6) a pressure which, with regard to the critical pressure of the refrigerant, is supercritical can be set, for carrying out the method according to Claim 1, **characterized in that** the flow rate through the compressor (2) can be controlled.

13. Cooling system according to Claim 12, **characterized in that** the throttle means is a constant throttle valve (11).

14. Cooling system according to Claim 12, **characterized in that** the throttle means (4) can be controlled.

15. Cooling system according to Claim 12, **characterized in that** integrated in the circuit (8) on the low pressure side (7) of the circuit (8) is a buffer container (10) for holding refrigerant.

16. Cooling system according to Claim 12, **characterized in that** the compressor (2) has an adjusting device (16, 21) with which an intake throttle, which is arranged on its intake side (13), can be controlled.

17. Cooling system according to Claim 12, **characterized in that** the compressor (2) has an adjusting device (16) for adjusting the compression stroke of the compressor (2).

18. Cooling system according to Claim 12, **characterized in that** the compressor (2) has an adjusting device (21) for varying the final compression volume of the compressor (2).

19. Cooling system according to Claim 12, **characterized in that** the compressor (2) has an adjusting device for varying the speed of the compressor drive.

20. Cooling system according to Claim 12, **characterized in that** integrated in the circuit (8) is a counterflow heat exchanger (9) which produces a thermal connection between the high pressure side (6) and the low pressure side (7).

21. Cooling system according to one of Claims 16, 17, 18 or 19, **characterized in that** the adjusting devices (16, 21) for setting the refrigerating power can be operated manually.

22. Cooling system according to one of Claims 16, 17, 18 or 19, **characterized in that** after a temperature value has been selected the adjusting devices (16, 21) can be operated automatically via a control device in respect of maintaining the set desired temperature.

23. Cooling system according to Claim 12, **characterized in that** the compressor (2) is driven by being connected to the engine of the vehicle.

24. Cooling system according to Claim 12, **characterized in that** the compressor (2) is driven by being connected to a motor which is separate from the engine of the vehicle.

25. Cooling system according to Claim 12, **characterized in that** as refrigerant provision is made for an environmentally compatible, non-combustible, non-toxic refrigerant which operates under transcritical pressure conditions, preferably CO₂.

## Revendications

1. Procédé de fonctionnement d'une installation de production de froid pour la climatisation de véhicules, dans lequel, pour fournir de la puissance frigorifique, une pression, surcritique du point de vue de la pression critique d'un fluide frigorigène circulant dans le circuit, est générée du côté haute pression d'un circuit de compression de vapeur (2), qui contient un compresseur (1, 8), un refroidisseur de gaz (3), un moyen d'étranglement (4, 11) et un évaporateur (5), qui sont branchés en série et constituent un circuit fermé intégral et, simultanément, une pression sous-critique est atteinte du côté basse pression du circuit, de l'énergie calorifique étant amenée par l'évaporateur au fluide frigorigène refroidi se trouvant du côté basse pression, ou bien de l'énergie frigorifique étant prélevée,
**caractérisé en ce que** le débit-masse de fluide frigorigène en circulation (1,8) est modulé, par le biais d'une régulation du débit de fluide frigorigène passant dans le compresseur (2).

2. Procédé selon la revendication 1, **caractérisé en ce que** le moyen d'étranglement (4) est réglé de manière que la haute pression soit maintenue à peu près constante sur le côté haute pression (6) du circuit (1).

3. Procédé selon la revendication 1, **caractérisé en ce que** la régulation du débit de fluide frigorigène passant dans le compresseur (2) se fait par modification de la quantité aspirée de fluide frigorigène passant dans le compresseur (2).

4. Procédé selon la revendication 1, **caractérisé en ce que** la régulation du débit de fluide frigorigène passant dans le compresseur (2) s'effectue par modification de la course de compression dans le compresseur (2).

5. Procédé selon la revendication 1, **caractérisé en ce que** la régulation du débit de fluide frigorigène passant dans le compresseur (2) se fait par modification du volume final de compression dans le compresseur (2).

6. Procédé selon la revendication 1, **caractérisé en ce que** la régulation du débit de fluide frigorigène passant dans le compresseur (2) se fait par modification de la vitesse de rotation de l'entraînement du compresseur.

7. Procédé selon la revendication 1, **caractérisé en ce que** le débit de fluide frigorigène passant dans le compresseur (2) - selon le choix d'une température constante souhaitée à titre de valeur de consigne pour l'habitacle du véhicule - est réglé automatiquement en fonction d'un écart valeur de consigne/valeur réelle de la température intérieure.

8. Procédé selon la revendication 1, **caractérisé en ce que** la régulation du débit de fluide frigorigène passant dans le compresseur (2) se fait par sélection d'une puissance frigorifique constante souhaitée.

9. Procédé selon la revendication 1, **caractérisé en ce que** le compresseur (2) est entraîné à une vitesse, indépendante de la vitesse de roulage et/ou de la vitesse de rotation du moteur de traction du véhicule.

10. Procédé selon la revendication 1, **caractérisé en ce que** le compresseur (2) est entraîné par le moteur d'entraînement du véhicule.

11. Procédé selon la revendication 1, **caractérisé en ce qu'**on utilise comme fluide frigorigène un fluide frigorigène compatible pour l'environnement, non inflammable, non nocif et travaillant dans des conditions de pression transcritiques, de préférence du CO2.

12. Installation de production frigorifique équipée d'un compresseur (2), d'un refroidisseur de gaz (3), d'un moyen d'étranglement (4, 11) et d'un évaporateur (5), qui sont branchés en série et forment un circuit de compression de vapeur (1,8) fermé, intégral, pour un fluide frigorigène et coopèrent de manière que le circuit (1,8) soit susceptible d'être divisé en un côté haute pression et un côté basse pression (6, 7) et, sur le côté haute-pression (6), est susceptible d'être réglé une pression surcritique par rapport à la pression critique du fluide frigorigène, pour la mise en oeuvre du procédé selon la revendication 1,
**caractérisé en ce que** le compresseur (2) est doté d'une possibilité de régulation de débit.

13. Installation de production frigorifique selon la revendication 12, **caractérisé en ce que** le moyen d'étranglement est une soupape d'étranglement à réglage constant (11).

14. Installation de production frigorifique selon la revendication 12, **caractérisé en ce que** le moyen d'étranglement (14) est réglable.

15. Installation de production frigorifique selon la revendication 12, **caractérisé en ce qu'**un réservoir tampon (10) devant recevoir du fluide frigorigène est intégré dans le circuit (8) du côté basse pression (7) du circuit (8).

16. Installation de production frigorifique selon la revendication 12, **caractérisé en ce que** le compresseur (2) présente un dispositif de réglage (16, 21), à l'aide duquel un élément d'étranglement d'aspiration, disposé du côté aspiration (13), est réglable.

17. Installation de production frigorifique selon la revendication 12, **caractérisé en ce que** le compresseur (2) présente un dispositif de réglage (16) pour régler la course de compression du compresseur (2).

18. Installation de production frigorifique selon la revendication 12, **caractérisé en ce que** le compresseur (2) présente un dispositif de réglage (21) pour modifier le volume de compression du compresseur (2).

19. Installation de production frigorifique selon la revendication 12, **caractérisé en ce que** le compresseur (2) présente un dispositif de réglage pour modifier la vitesse de rotation de l'entraînement du compresseur.

20. Installation de production frigorifique selon la revendication 12, **caractérisé en ce qu'**un échangeur de chaleur à contre-courant (9), qui relie thermiquement le côté haute-pression (6) au côté basse-pression (7), est intégré dans le circuit (8).

21. Installation de production frigorifique selon l'une des revendications 16, 17, 18 ou 19, **caractérisé en ce que** les dispositifs de réglage (16, 21), destinés au réglage de la puissance frigorifique, sont actionnables manuellement.

22. Installation de production frigorifique selon l'une des revendications 16, 17, 18 ou 19, **caractérisé en ce que**, selon le choix d'une valeur de température, les dispositifs de réglage (16, 21) sont actionnables automatiquement par l'intermédiaire d'un régulateur, eu égard au respect de la température de consigne réglée.

23. Installation de production frigorifique selon la revendication 12, **caractérisé en ce que**, pour assurer l'entraînement du compresseur (2), celui-ci est couplé au moteur d'entraînement du véhicule.

24. Installation de production frigorifique selon la revendication 12, **caractérisé en ce que**, pour assurer l'entraînement du compresseur (2), celui-ci est couplé à un moteur séparé du moteur d'entraînement du véhicule.

25. Installation de production frigorifique selon la revendication 12, **caractérisé en ce qu'**à titre de fluide frigorigène est prévu un fluide frigorigène compatible pour l'environnement, non inflammable, non nocif et travaillant dans des conditions transcritiques, de préférence du CO₂.
